# EUROPEAN PATENT SPECIFICATION

(11) **EP 2 274 922 B1**
(45) Date of publication and mention of the grant of the patent: **25.03.2020**
(21) Application number: 09728736.1
(22) Date of filing: 03.04.2009
(51) Int. Cl.: H04Q 3/00, H04M 3/22

(54) **A SYSTEM AND METHOD FOR ALERTING A PARTY IN A CALL OF A CALL DISCONNECTION OF ANOTHER PARTY**
SYSTEM UND VERFAHREN ZUM HINWEISEN EINES TEILNEHMERS EINES ANRUFS AUF EINE ANRUFTRENNUNG EINES ANDEREN TEILNEHMERS
SYSTÈME ET PROCÉDÉ PERMETTANT D'ALERTER UNE PARTIE DANS UN APPEL DE LA DÉCONNEXION DE L'AUTRE PARTIE DE L'APPEL

(30) Priority: 03.04.2008 EP 08305081
(43) Date of publication of application: 19.01.2011
(73) Proprietor: Orange, 75015 Paris (FR)
(72) Inventor: MOULIN, Benedicte, London SW1V 1QS (GB); JIMENEZ ALDAMA, Borja, F-75015 Paris (FR); LE SAUX, Louis-Marie, London W4 4HE (GB)
(86) International application number: PCT/EP2009/054009
(87) International publication number: WO 2009/121954

(56) References cited:
- EP-A- 1 480 427
- US-A- 5 566 236
- US-A1- 2004 203 607

## Description

### FIELD OF THE PRESENT SYSTEM:

The present invention generally relates to telecommunications, and more specifically to the delivery of enhanced communications services.

### BACKGROUND OF THE PRESENT SYSTEM:

Mobile phones have become important devices in our daily life. Users count on the reliability of communication networks to ensure troubleless calls or data services. Unfortunately, mobile phones are commonly disconnected from their telecommunication network, for example a Global System for Mobile (GSM) network or a Code Division Multiple Access (CDMA) network, causing a call to another party to end. The loss of connection signal, causing the call disconnection, may be due for instance to a poor network coverage, e.g. when a user enters a tunnel, takes a lift or the subway. Such loss of connection signal (or connectivity) during a call is often called a call drop or dropped call.

When this happens during a call, or e.g. a session such as a SIP (Session Initiation Protocol) session, the call/session is also lost (i.e. terminated) and the two parties are disconnected, even if the disruption is very short. With a dropped call, none of the two parties can simply rejoin the call, one of them needing to start a new one. It becomes then desirable for the user who lost the connection signal to easily reconnect with the other party to resume the call.

NewStep has already provided a solution to this problem called "Automatic Reconnect™", for a dropped call between first and second parties or users A and B respectively. When a call is dropped by the first party A, the call is not terminated as opposed to a normal termination after user A hangs up. The other user B stays in the call temporarily to give the first user A a window of time to reconnect to the call.

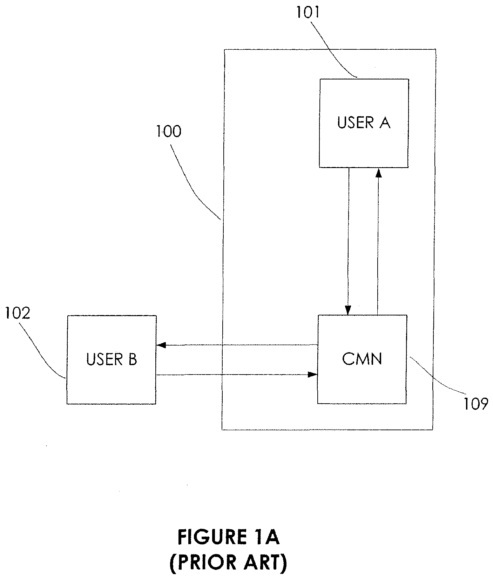

FIG. 1A shows an illustration of this known solution. A first and second communication devices, respectively 101 attached to user A and 102 attached to user B, are in communication (i.e. a call) with each other in a telecommunication network 100, for example a Private Branch eXchange (PBX) network. User A is attached to telecommunication network 100 while user B may be either in network 100 or attached to another telecommunication network.

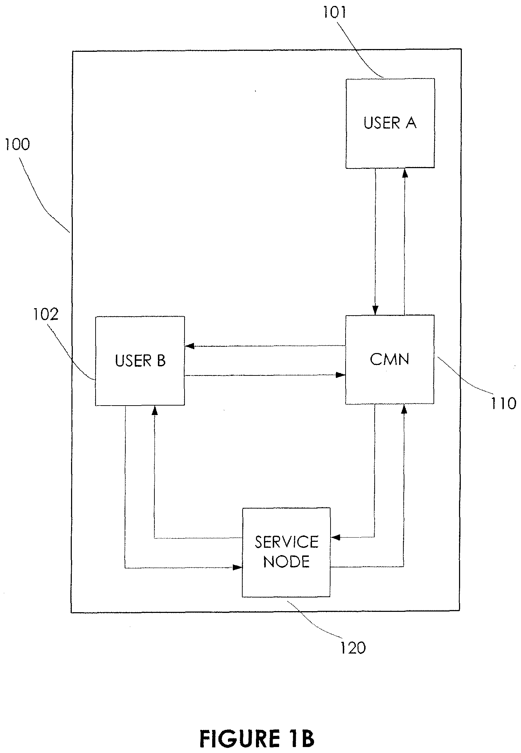

A call management node (CMN) 109 is provided within network 100 to provide advanced call management. To that extend, Call Management Node 109, plugged to PBX network 100, is aware of all signaling information (e.g. signaling messages) sent or received by any user of the network 100. CMN 109 is further adapted to intercept any signaling information of call disconnections issued by the network or coming from either party of network 100 in the call (in the example of FIG. 1 user A only). This information corresponds, in the present illustration, to the end (termination) of the call from user A's branch of the call. This management node 109 then keeps the message in order to keep the call active for user B, and will start a timer. If before the end of a given delay user A dials a special number, CMN 109 allows user A to reconnected to the call with B. If the timer reaches the given delay before A dials this "reconnect" number, the call is dropped following known call termination methods, e.g. through the release of the disconnect message to the rest of the network for further processing. This feature will be referred to as the reconnect feature here after.

If the first user A is able to easily rejoin the call after being disconnected from it, a main drawback in this solution is that the other party B has no indication of what is happening with the call. Even though the call is maintained while the timer is running, user B, without indication, may even guess that first user A has been disconnected after not hearing any further answer back from A. User B is then very likely to hang up, not knowing that A has the possibility to reconnect. Furthermore, if user B wants to hang up, he is not offered the possibility to leave a message prior to hanging up, that user A may retrieve when gaining connectivity again.

Moreover, the call disconnection signaling information, referred to here after as "call disconnection" or "BYE" messages, does not always correspond to a call drop. The existing solution is started for each BYE message received by the call management node, whether the BYE message results from a dropped call, a regular hung up or any other events triggering such a message. In other words, if A hangs up on purpose, the call will not be dropped.

Today there is still a need for solution that allows the call reconnect feature only for dropped calls. There is a further need for a solution that let user B knows that the call has been dropped and that there is a possibility user A may reconnect. There is a further need for a solution to have user B waiting at least a few moments in case A may reconnect or to redirect user B to a voicemail.

European patent application publication No. EP 1 480 427 A describes a dropped call continuation method that allows reestablishment effected to a same or a different phone number as that of the dropped party.

U.S. patent No. 5,566,236 describes a method that allows re-establishing a disconnected telephone connection between parties by sensing, through a call control platform, a disconnection of one of first and second telephone lines, and by controlling a tandem switch to maintain the connection with the other of first and second telephone lines.

### SUMMARY OF THE PRESENT SYSTEM AND METHOD:

It is an object of the present system, processor and method to overcome disadvantages and/or make improvements in the prior art.
To that extent, the present method proposes a method for alerting at least a second party in a call with a first party that said first party experience a call disconnection according to claim 1.

Thanks to the present method, a mean is proposed to provide to the second party a service either to have said second party waiting for the first party to reconnect or to inform said second party that the first party has been disconnected. Through this service, e.g. vocal or else, the second party knows that he/she is dealing with a dropped call and that the first party may optionally rejoin the call shortly. Better informed, the second party may proceed with different actions depending on the service, instead of simply hanging up. The present method may be achieved through a dedicated call management node (CMN) that is aware the signaling messages between the two parties, retains a BYE message, and allows the connection of the first party with a service hosted by a service node from the telecommunication network.

Furthermore, as all causes of disconnection may not need the provision of a disconnection service, this provision may be conditioned only when the cause requires it.

A call management node according to claim 4 as well as a computer program according to claim 8 will be described hereafter.

### BRIEF DESCRIPTION OF THE DRAWINGS:

The present system, call management node and method are explained in further detail, and by way of example, with reference to the accompanying drawings wherein:
FIG. 1A shows an illustration of a known system,
FIG. 1B shows an illustration of an exemplary embodiment of the present system,
FIG. 2A-B shows a flow chart illustrating exemplary embodiments of the present method,
FIG. 3 shows a flow chart illustrating another exemplary embodiment of the present method,
FIGs. 4A to 4G show the different call flowcharts illustrating exemplary embodiments of the present method, and;
FIG. 5 shows an exemplary embodiment of a GSM network for implementing the present method.

### DETAILED DESCRIPTION OF THE PRESENT SYSTEM AND METHOD:

The following are descriptions of exemplary embodiments that when taken in conjunction with the drawings will demonstrate the above noted features and advantages, and introduce further ones.

In the following description, for purposes of explanation rather than limitation, specific details are set forth such as architecture, interfaces, techniques, etc., for illustration. However, it will be apparent to those of ordinary skill in the art that other embodiments that depart from these details would still be understood to be within the scope of the appended claims.

Moreover, for the purpose of clarity, detailed descriptions of well-known devices, systems, and methods are omitted so as not to obscure the description of the present system. Furthermore, routers, servers, nodes, base stations, or other entities in a telecommunication network are not represented as their implementation is beyond the scope of the present system and method.

Unless specified otherwise, the exemplary embodiment will be described hereafter in its application to a PBX (Private Branch eXchange) network. This illustration is in no way a limitation of the scope of the present method and system as other telecommunication networks (IP Centrex, 3G network, GSM network, ...) may implement such a method.

Furthermore, what will be referred to as a "call" in this description may be a standard voice call or any other session established between a first party A and another party referred to as user B, more precisely between their respective telecommunication devices, for instance a video call between user A and user B. Each side of the call in the telecommunication network will be referred to a branch or a leg of the call. The call will be illustrated here after as a call between two parties A and B. The present teaching may be readily transposed to a call between 3 or more parties with at least one party experiencing a call disconnection.

In addition, it should be expressly understood that the drawings are included for illustrative purposes and do not represent the scope of the present system.

FIG. 1B shows an exemplary embodiment of the present system. A PBX 100 comprises a first telecommunication device 101 (attached to a first user A) and a second telecommunication device 102 (attached to a second user B) communicating with each other. In the hereafter description, first and second parties A and B are part of the same telecommunication network.

A Private Branch eXchange (PBX) is a private telephone network that serves a particular business or office, as opposed to one that a common carrier or telephone company operates for many businesses or for the general public. A PBX is generally enable through a PBX server and includes an access to a public switched telephone network (PSTN) for access outside the private telephone network (not shown here). The functions of the PBX include the handling of connections between end (or telecommunication) devices such as telephones, and various feature-based services such as voicemail, call forwarding and conferencing, remote call forwarding among others. These features may be activated through service-specific buttons on end devices or through browsing a menu of features available on said end devices.

The PBX network 100 is provided with a call management node 110 that is aware of all signaling messages sent or received by the PBX in connection to a communication session between user A and user B. The signaling messages may be limited to user A only if user B were to be located outside PBX 100.

CMN 110 may be part of the PBX or hosted by a different node. These signaling messages may either transit through CMN 110 ("direct awareness") or notification of such messages may be sent to CMN 110 ("indirect awareness"). Furthermore a service node (or server) 120 is also provided for rendering one or more services to any user of the PBX network, services such as voicemail, media rendering or else.

When both users A and B are in a communication (or call) with each others, different entities of the PBX network (not shown here) are involved to ensure the communication link between said users. A communication between these two users generally involves a two level exchange mechanism:
- a signaling level corresponding to the signaling messages exchanges through the network entities between the two users,
- a media level for handling data, voice, ...

A communication path or link is formed within the network through different network entities to ensure the connection between these two users. Once the communication is normally terminated, a BYE message is sent by either telecommunication device that terminated the call (if not both), and this message is passed on the signaling level through the different entities (of the communication path) that terminate the exchange.

In the existing solution as illustrated in FIG. 1A, user B is not alerted of user A's loss of connection signal. That may result in user B hanging up before user A even gets a chance to user the reconnect feature. More generally user B is not given any indication of the call disconnection except for the lack of interaction with user A.

Thanks to the present method, user B is connected to service node 120 which provides to said user B an indication that user A has been disconnected. That indication may be for instance an indication that:
- he/she needs to stay online until user A gets a chance to reconnect to the call, e.g. through music or a message,
- the call will be dropped,
- he/she may leave a message to user A, if the communication service is a voicemail,
- he/she has the choice between any of the here-above options as well as other ones, through an Interactive Voice Response (IVR) service.

Indeed, in the event of a drop call due to a loss of connectivity (a lack of network coverage in user A's location), user A may try to reconnect as soon as the first telecommunication device gets a network signal.

Different communication services may be envisaged to give user B an indication of what is happening. A music server (or music node) for instance may be used so that user B gets to hear a given music while waiting for A to reconnect. A voicemail server may also be used so that user B hears a voicemail greeting signaling the call drop and offering this user B the possibility of leaving a message that user A will get upon regaining network coverage.

The present method may be implemented thanks to a module 110, also called Call Management Node, and to a service node 120 as illustrated in FIG. 1B. CMN 110 may be a standalone node or embedded in another node of network 100. CMN 110 may for instance be associated to the existing CMN 109 of FIG. 1A as this later node is already adapted to intercept the disconnection messages.

Other existing features such as the connection to a music server or a voicemail server are readily known to the man in the art and are not within the scope of the present method and system. The call reconnect feature, if implemented, may be available to any users from network 100 or on a subscription based. In the later case, CMN 110 is also adapted to identify whether user A or user B are registered users to this feature.

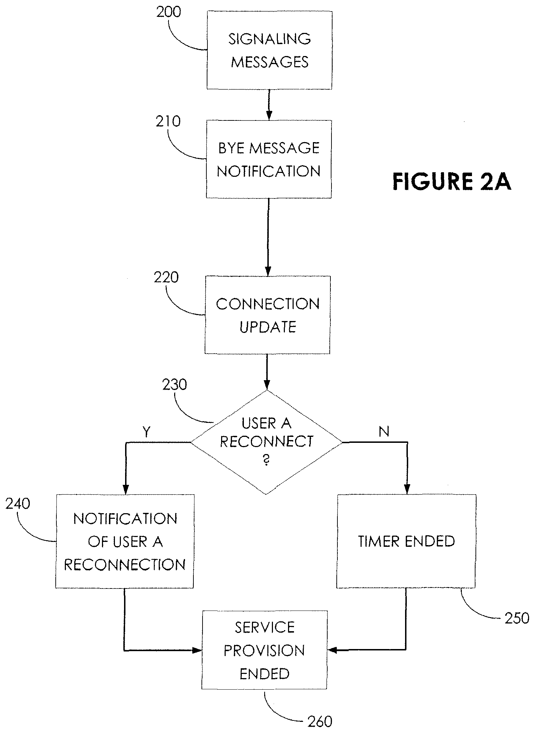

FIG. 2A shows a flowchart illustrating an exemplary embodiment of the present method. CMN 110 is adapted to carry out the following acts. In a preliminary and optional act (not shown in FIG. 2A), CMN 110 may receive and handle registration requests from users of the communication network. Through this optional act, CMN 110 collects the information necessary to identify the registered users in case the reconnection feature is only available on a subscription or registration basis. This identification information may be network specific and is beyond the scope of the present method. The present embodiment is illustrated with a call between two users A and B, having respectively a first and second telecommunication devices.

As mentioned before, CMN 110 is aware in a further act 200 of the signaling messages sent or received by the network users. Alternatively, CMN 110 may only receive the BYE messages if a filtering node is provided in PBX 100 to reroute such messages to CMN 110. In another alternative embodiment, the BYE messages may be intercepted by a dedicated node, which will notify the CMN of any received BYE messages. For simplification purposes, the here after embodiment of the present method will be illustrated with CMN 110 intercepting the BYE messages itself.

In a further act 210, a disconnection message is intercepted. This message is generated when the first device (from user A) gets disconnected and corresponds to a BYE message received by CMN 110 from user A's call leg. In an additional embodiment of the present method, a timer may be started by CMN 110 to measure the duration before user A reconnects. As the disconnection message is intercepted and kept at the call management node, the second device (from user B) is not disconnected and user B "remains in the call".

In an additional act 220, CMN 110 is adapted to connect user B with a service node that can activate, i.e. trigger, a given communication service to said user B. This may be achieved through sending a connection update to the second device so that the second party B (ie his/her telecommunication device) becomes connected to the service node for provision of the communication service.

In a further act 230, CMN 110 waits for an indication that the first party A has reconnected. When user A re-enters a location with network coverage, or has access again to the network, he/she may request a call reconnection. In order to take the request into account, the first telecommunication device may send a "reconnect" INVITE to the network. CMN is adapted to intercept either said reconnect INVITE or a notification that A has sent such an invite. When receiving such information in act 240, CMN may proceed with sending both users A and B a connection update so that the call may be resumed between the two telecommunication devices. In a further act 260, a notification sent to the service node 120 by CMN 110 to end the provision of the communication service.

In the case the reconnect feature is implemented, and in order to avoid too long a delay before A may reconnect, a given time, i.e. a first delay MAX_DELAY, may be defined as the maximum delay offered to user A to reconnect to the call before ending said call definitively. If - in an additional act 250 - the timer (started in act 210) reaches MAX_DELAY before CMN 110 receives any indication that user A is trying to reconnect, the call is disconnected, i.e. CMN 110 forwards (or triggers the forwarding of) the intercepted BYE message (received from user A's call leg) to the different network entities ensuring that user B's call leg is dropped.

In an optional embodiment of the present method, the service node may be a media server. When user B is connected to the media server, a variety of media may be streamed, played, pushed, ... to user B so that his/her device may play the media. Existing solutions are readily available to the man skilled in the art, and are beyond the scope of the present method.

The choice of media server as well as the media itself may be determined using different parameters. To this extend, the connection update sent by CMN 110 comprises configuration information for the communication service. This configuration information may be based on profiles associated with either one or both parties in the call. For instance, the information may be based on:
- user A profile, which may for instance comprise a preferred language, a subscription status or a type of media. User A profile may be enriched with his/her list of contacts, the media then depending also on user B characteristics attached to said user B by user A,
- media servers availability,
- information about the second telecommunication device (from user B) capabilities (e.g. codec capabilities, type of device, ...)

In relaying user B to the media server, CMN may forward any subset of the following parameters:
- media server address (IP address or other identifier)
- stream identifier (e.g. media server address + port + UDP (User Diagram Protocol),
- type of stream (broadcast/unicast)
- type of media (music/video, codec, bandwidth, volume...)
- any other parameter which may accepted by the media server

In the embodiment illustrated in relation to FIG.2A and acts 200 to 260, all BYE messages trigger the given communication service.

In some instances, the cause of communication ending is available at the network level. In an additional embodiment of the present method, this cause may be used to decide if the situation requires user B to wait for user A to reconnect. In other words, the given communication service may only be triggered whether the identified cause for the call disconnection belongs or not to listed causes (requiring user B to be connected to the communication service).

When the first telecommunication device loses its connectivity, the telecommunication network is adapted to end the call and generates a disconnection message to do so, as mentioned before. This signaling message has a different name depending on the signaling protocol as illustrated in Table 1 here below. Whatever the signaling protocol may be, the objective of such messages is the same and its parameters are usually very similar across protocols.

**Table 1: disconnection message for different protocols**

| **Message name** | **Protocol** | **Standards** | **Standard reference** |
|---|---|---|---|
| REL | SS7 - ISUP | ITU-T | Q.850 |
| disconnect | ISDN | ITU-T | Q.931 |
| BYE | SIP | IETF | RFC 3261 |

with:
- ISDN: Signalling protocol used in the public network outside the core network (specified in International Telecommunication Union ITU Q.931).
- SS7: Signalling protocol used in the public and mobile core networks.
- ISUP: ISDN User Part, i.e. subpart of SS7 dedicated to call management (specified in ITU Q.761-Q.764, Q.784-Q.785)
- SIP: Signalling protocol used over Internet Protocol (specified in the Internet Engineering Task Force IETF RFC 3261)

All this messages include a field called either "cause" or "reason" which gives an indication of the reason why the communication ended. In this additional embodiment, the CMN is adapted to use this field to distinguish a "regular hang up" from a dropped call as the reason indicated in this field is usually different.

The different protocols usually have similar way to represent the cause or reason of a user disconnection and provide tables to map the cause codes between different protocols. The main reference is Q.850 (Usage of cause and location in the Digital subscriber signaling system n°1 and the signaling system n°7 ISDN User Part) which is usually used in SIP messages and Q.931 contains a subset of Q.850.

Below are examples of two BYE messages in SIP which have been generated with a GSM phone in a call in two different situations:
- the first BYE message has been sent after a hang up,
- the second BYE message has been sent after a sudden network disconnection (battery removed).

| |
|---|
| MESSAGE #1 |
| Via: SIP/2.0/TCP 192.168.101.2 |
| Max-Forwards: 70 |
| From: <sip:aaaaaaaaaaa@192.168.100.1> |
| To: <sip:bbbbbbbbbbb@192.168.100.2> |
| Call-ID: 695a9380-79e1f68c@192.168.100.2 |
| CSeq: 1 BYE |
| Contact: <sip:5003@192.168.100.1;transport-tcp> |
| Supported: em,timer,replaces,path |
| Allow: |
| REGISTER,OPTIONS,INVITE,ACK,CANCEL,BYE,NOTIFY,PRACK,REFER,INFO,SUBSCRIBE,UPDATE |
| **Reason: Q.850 ; cause=16** |
| Content-Length: 0 |
| MESSAGE #2 |
| Via: SIP/2.0/TCP 192.168.100.1 |
| Max-Forwards: 70 |
| From: <sip:aaaaaaaaaaa@192.168.100.1> |
| To: <sip:bbbbbbbbbbb@192.168.100.2> |
| Call-ID: c6574900-79e1fa83@192.168.100.2 |
| CSeq: 1 BYE |
| Contact: <sip:5007@192.168.100.1;transport-tcp> |
| Supported: em,timer,replaces,path |
| Allow: |
| REGISTER,OPTIONS,INVITE,ACK,CANCEL,BYE,NOTIFY,PRACK,REFER,INFO,SUBSCRIBE,UPDATE |
| **Reason: Q.850 ;cause=31** |
| Content-Length: 0 |

To understand the cause of the call disconnection, one needs to look in the Q.850 specifications, as this standard is used in the here above exemplary messages to give the cause for ending the call:
- cause #16 means "Normal call clearing" which corresponds to a regular hang up by either of the two users A and B,
- cause #31 means "Normal, unspecified" which, according to the standard, may be explained by a "Call failure information" which is an indication that the failure of the call is due to the lapse of a timeout or a fault not covered by specific causes (examples: expiry of timers Q.764 not covered by specific causes, release of interconnected circuit, etc.)".

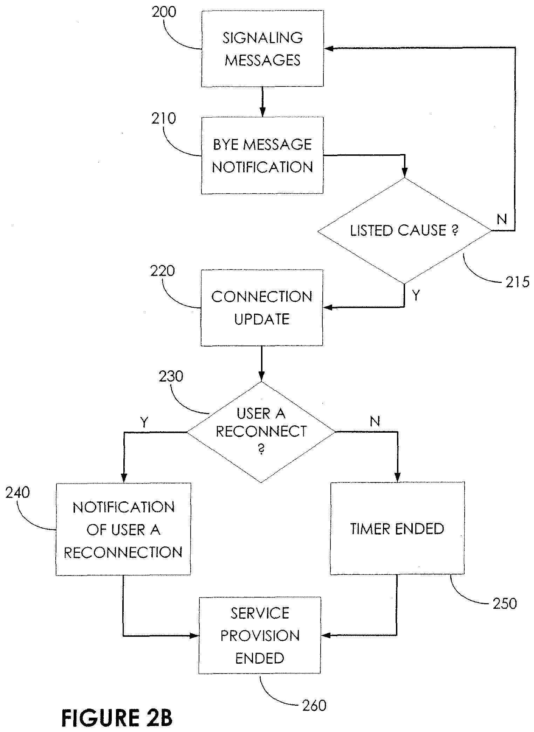

The use of this field in the present method is illustrated in FIG. 2B. In this additional embodiment, compared to the embodiment illustrated in FIG. 2A, acts 200 to 260 remain unchanged with the exception of the transition between acts 210 and 220, which corresponds to act 215.

Once the disconnection message is intercepted in act 210, the cause of the call disconnection is analyzed in a further act 215. In said act 215, CMN 110 is further adapted to match the identified cause with any listed cause for triggering the communication service. If the cause is identified as a cause that requires user B to be informed through the communication service, acts 220 to 260 are carried on as described before. The list of possible causes that will trigger acts 220 to 260 may be defined at the network level. The causes may include a loss of connectivity (dropped call), a low battery, or any other call disconnection that leaves the possibility for user A to resume the call shortly. If the identified cause does not need user B to be informed, CMN 110 will resume act 200. The list of causes that trigger the communication service to user B may be configurable in the CMN or in a different node (that stores said list) CMN 110 has access to.

The CMN 110 may also be adapted to inform the rest of the system that the communication service does not need to be activated.

In an other alternative embodiment of the present method, it may be interesting to wait for a second delay SERVICE_DELAY before starting the rendering of the media service. This may be useful for instance when the cause of the call disconnection is not known. As the CMN cannot know the reason behind the disconnection of user A, all BYE messages trigger the communication service as illustrated in the embodiment of FIG. 2A. This second delay, called here after SERVICE_DELAY, may give enough time for user B to hang up in case the disconnection from user A is a regular hang up. Furthermore, if for instance, users A and B want to end the call and A hangs up first, B may not hang up if he/she hears music or any communication service in his/her phone. For that reason it may be useful to wait for a few seconds before starting the music to give B the time to hang up.

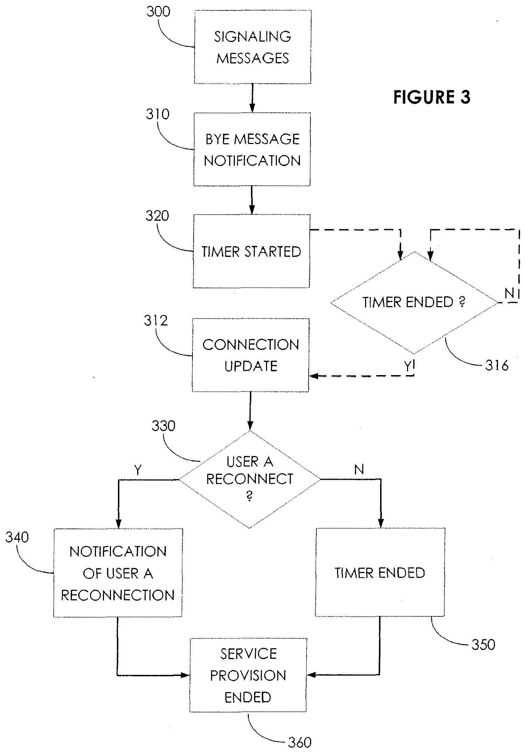

FIG. 3 shows a flowchart illustrating another embodiment of the present method, which implements this second delay SERVICE_DELAY prior to triggering the communication service.

Acts 300 and 310 correspond to acts 200 and 210 described before. In a further act 312, a second timer (as opposed to the timer measuring MAX_DELAY) is started. In a further act 316, the CMN checks if the timer has reached the SERVICE_DELAY value. If not, act 316 is repeated. When this value is reached, CMN proceeds with activating communication service in a further act 320. Acts 320 to 360 correspond to acts 220 to 260 respectively, and described here before in relation to FIG. 2A.

In the illustration of FIG. 3, the timer is started by the CMN. In an alternative embodiment the timer may be started in act 312 by the service node itself, following a timer request sent from the CMN.

The different embodiments may be implemented alone or with each other in any possible combination. For example, the use of the cause in the BYE message (FIG. 2B) may be combined with the timer delay the service connection (FIG. 3).

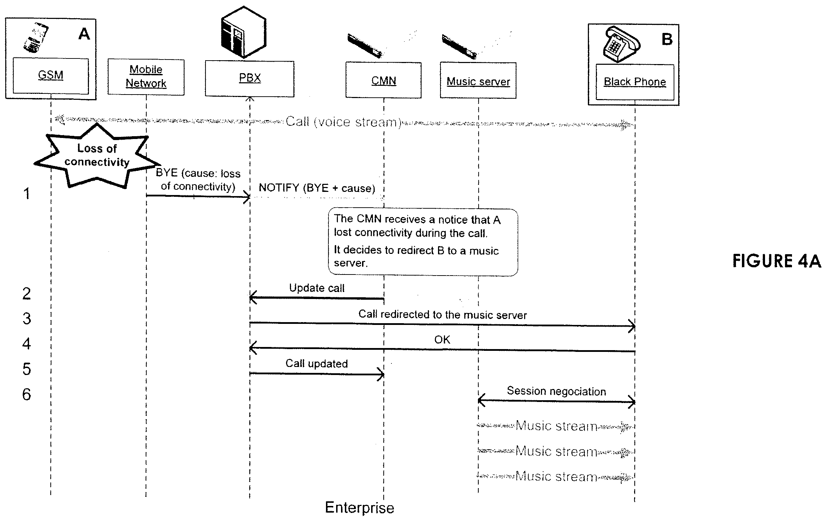

FIG. 4A-G illustrate different call flows corresponding to implementations of the present method in various telecommunication networks.

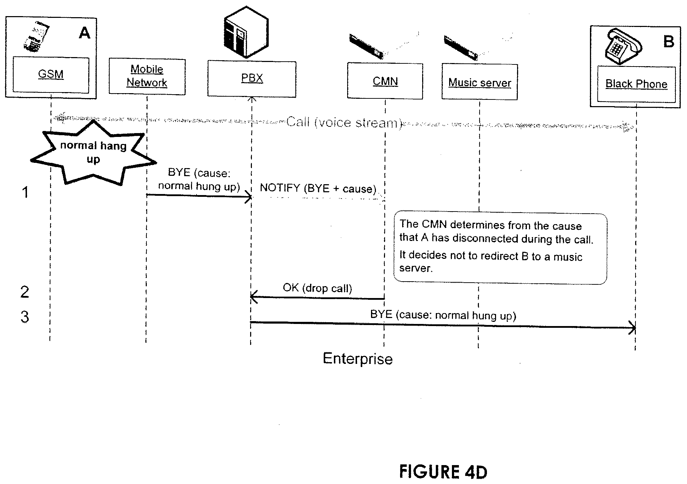

In all figures FIG. 4A-G (with the exception of FIG. 4D), the triggering event is a loss of connectivity. Furthermore, the communication service node is illustrated as a music server for simplification purpose.

The CMN may be integrated or connected to a PBX, in an enterprise network as illustrated in FIG. 4A-E. User A may be a PBX subscriber. User B may be any phone, whether from the enterprise network or not. To simplify the call flows, a mobile network ensures communication links between user A and the PBX. The enterprise network comprises a PBX node, a music node, and the CMN. The PBX is assumed to already implement the known reconnect feature.

In FIG. 4A, the exemplary call flow shows a situation wherein user A has lost connectivity with his/her network and the MNC redirects user B call to the music server so that user B can listen to music while waiting for A to reconnect. Here the CMN uses the PBX to implement the call redirection. Thus, CMN sends a connection update in an act 2 of FIG. 4A indirectly to user B, using the PBX node as an intermediary node. This implementation relies upon the fact that the PBX node is the node already managing the communication session between user A and users B. For instance, in a call waiting feature, if user A were to put user B on hold, the PBX would be the active node updating the call session for user B so that B is redirected to a music server.

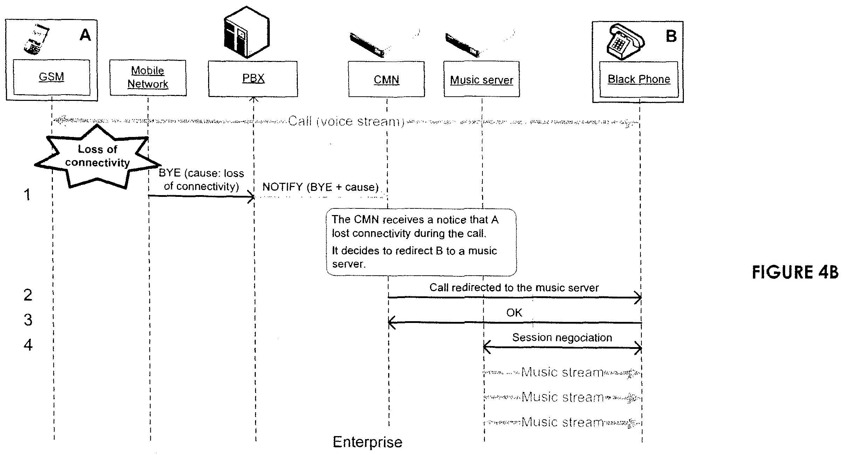

In an alternative implementation illustrated with the flow chart of FIG. 4B, the CMN may handle the call redirection itself. As may be seen in act 2 of FIG. 4B, the connection update is sent directly by the CMN to user B.

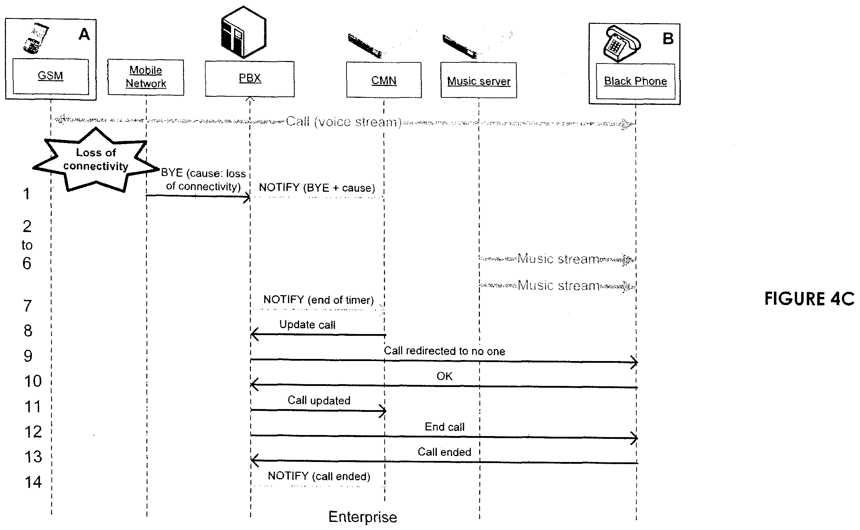

An additional implementation of the present method is illustrated in FIG. 4C. This exemplary implementation illustrates the flow of messages when a timer is started to give a delay of MAX_DELAY for user A to reconnect. The case is a continuation of the case illustrated in FIG. 4A, and only initial act 1 and part of act 6 are shown for simplification purposes. The timer measuring the first delay is started by the PBX node, and this case carries on from FIG. 4A with the PBX node notify in a further act 7 the end of the timer (MAX_DELAY has been reached). As the PBX node is managing the call session between user B and the music node, the PBX node ends the call session and the music is stopped in further acts 9 and 10 of FIG. 4C.

Another exemplary implantation of the present method is illustrated in FIG. 4D. This corresponds to the case wherein the cause of the call disconnection is available in the BYE message. The triggering event in relation to this example is a normal hung up. The CMN 110 is adapted to identify the cause behind user A disconnection, and identifies such a cause (normal hung up) as not requiring the reconnection of user B to the music server. The call is terminated normally by the PBX after the intercepted BYE message (intercepted in act 1 of FIG. 4D) is unlocked by the CMN.

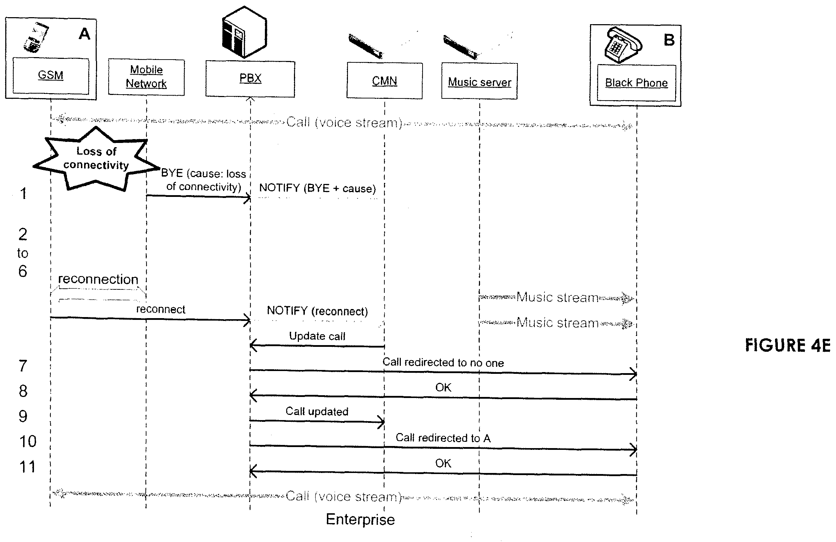

An additional implementation of the present method is illustrated in FIG. 4E. This exemplary implementation illustrates the flow of messages when user A regains network coverage and reconnect to the call. The case is a continuation of the case illustrated in FIG. 4A, and only initial act 1 and part of act 6 are shown for simplification purposes. The reconnection of user A takes place during act 6 while the music steam is sent to user B. In this exemplary implementation, the reconnect feature is handled by the PBX which sends a message (act 9) to the CMN to inform this node that the call between user A and user B is about to resume. The CMN notifies the music server to stop the music played to user B.

The here above exemplary implementations were illustrated with a enterprise network using a PBX node. The present teachings may be easily transposed to other network infrastructures, such as mobile networks (GSM, 3G, CDMA, and the likes), IP centrex networks or wired line networks, or a combination of two or more of all the listed infrastructures.

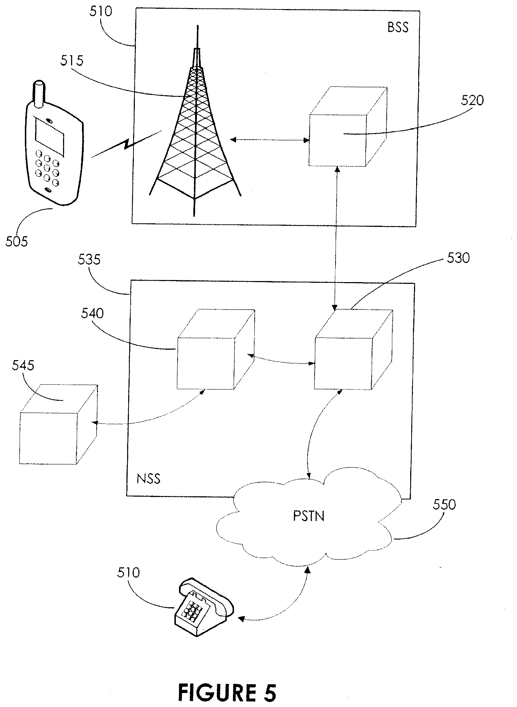

FIG. 5 is an illustration of a GSM network. User A 505 is a mobile user, while user B 510 may a wired line phone accessible through the Public Switched Telephone Network (PSTN) 550 or a mobile user as well. Mobile 505 is attached to Base Station 515, which with the Base Station Controller (BSC) 520 form the Base Station Subsystem 510. BSC 520 is linked to the Mobile Switching Center MSC 530 within the GSM Network Subsystem NSS 535. MSC 530 is the primary service delivery node in a GSM network, responsible for handling voice calls and SMS , as well as other services (conference calls, circuit switched data, ...). MSC 530 can connect user A to user B through PSTN 550.

The Call Management Node 540, is either a module plugged into MSC 530, or part of a different node. CMN 540 is adapted as before to intercept the BYE messages (or notification thereof), when user A is disconnected. The communication service node, here illustrated as a music server 545, may stand within or outside the GSM network.

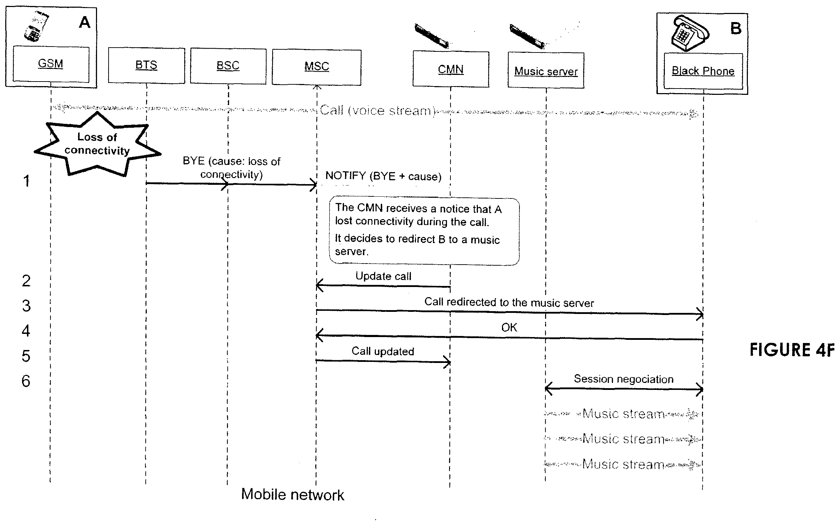

FIG. 4F is an illustration of an embodiment of the present method for a GSM network as illustrated in FIG. 5. This embodiment is similar to the embodiment illustrated in FIG. 4A, with the PBX node and MSC 530 playing the same role in relation to the present method.

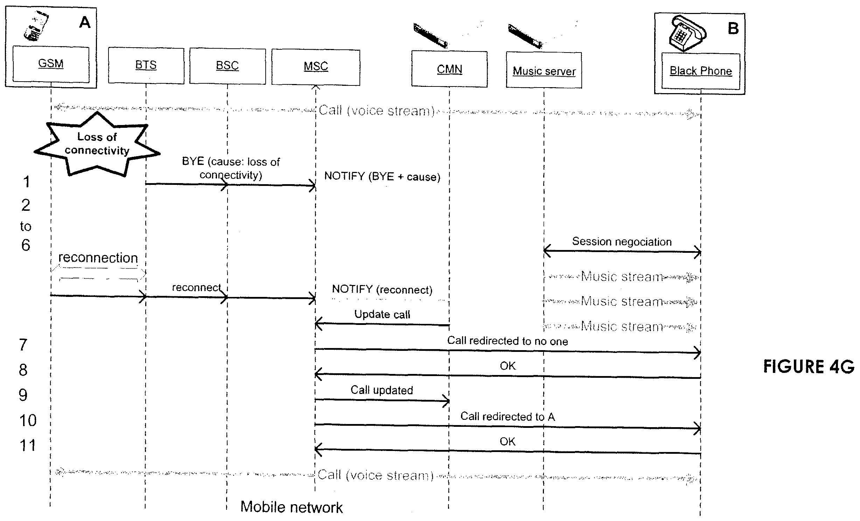

An additional implementation of the present method is illustrated in FIG. 4G. This exemplary implementation illustrates the flow of messages when user A regains network coverage and reconnect to the call in a GSM telecommunication network. The case is a continuation of the case illustrated in FIG. 4F, and only initial act 1 and part of act 6 are shown for simplification purposes. The reconnection of user A takes place during act 6 while the music steam is sent to user B. In this exemplary implementation, the reconnect feature is handled by the MSC 530 which sends a message (act 9) to CMN 540 to inform this node that the call between user A and user B is about to resume. The CMN then notify the music server 545 to stop the music played to user B.

Of course, it is to be appreciated that any one of the above embodiments or methods may be combined with one or more other embodiments and/or methods or be separated and/or performed amongst separate devices or device portions in accordance with the present system.

For instance, the CMN may trigger the communication services in various ways. For instance:
- the CMN may redirect user B itself to the service node, through the connection update signal,
- it may request another element of the telecommunication network to carry out the redirection, e.g. a PBX, a Centrex, ...
- It may indirectly trigger the service node by for example making the PBX or another node believe the first user A put the call on hold. This would automatically trigger the music for B.

Furthermore, the parameters used by the CMN may be either stored in the CMN itself or retrieved from any other node. For example, A's profile, B's capabilities or a communication server address and capabilities may be retrieve from a PBX. The CMN may be integrated in another environment, whether it is an enterprise or mobile environment, or any other environment, possibly reusing existing features.

As the CMN needs to be aware of all "BYE" messages from user A, it may preferably be connected or part of a node which can see all of user A's messages. This usually the case when user A is a subscriber of the telecommunication system, for instance a PBX user is a PBX subscriber, a mobile phone user is a subscriber to a mobile network. In other words, user A may preferably be a subscriber of the telecommunication system the CMN is connected to or embedded in.

In the description here above, reference was made to a single communication service. The man skilled in the art may extend the present teachings to the use of several communication services, hosted either by the same service node, or different ones, to offer to user B a combination of services, either consecutive, or in parallel. For instance, music may be played for a given time to user B, and after MAX_DELAY is elapsed, without user A reconnecting, the call may be redirected to a voice mail for offering user B the option of leaving a message to user A. In another example, user B may be presented with a service menu, offering said user the possibility to either listen to music, leave a message, or any other communication service that may be interesting to present to user B to either make him/her wait for the reconnection of user A, or make him use a service pushed by the network operator, or let said user B know that user A experienced a call disconnection.

Furthermore, reference has been made on several instances to the reconnect feature. The reconnect feature is an optional feature offered to the first party A to reconnect, and is not part of the present method and system.

Finally, the above-discussion is intended to be merely illustrative of the present system and should not be construed as limiting the appended claims to any particular embodiment or group of embodiments.

The section headings included herein are intended to facilitate a review but are not intended to limit the scope of the present system. Accordingly, the specifications and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analogue and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. A method for alerting at least a second party (102) in a call with a first party (101) that said first party experienced a call disconnection, the method being **characterized in that** it comprises the following steps, in a call management node (110) of a telecommunication network:
- intercepting signaling information (210) corresponding to the call disconnection of the first party, wherein the signaling information (210) comprises an indication of a cause of the call disconnection; and
- sending at least one connection update (220) directed to connecting the second party to a service node (120) in the telecommunication network for provision of one or more communication services, if said cause requires the provision of the one or more communication services to the second party, said cause being identified in a list of possible causes as matching with any listed cause that requires the second party to be informed through said one or more communication services,
wherein the connection update is with held if said cause does not require the provision of the one or more communication services to the second party, said cause being identified in said list as a cause that does not need the second party to be informed.

2. A method according to claim 1, wherein the connection update comprises configuration information for the communication service, said configuration information being based on profiles associated with either one or both of the first and second parties (101-102).

3. A method according to any of the previous claims, further comprising:
waiting for a given period of time prior to sending the connection update.

4. A call management node (110) in a telecommunication network for alerting at least a second party (102) in a call with a first party (101) that said first party experienced a call disconnection, **characterized in that** the call management node is adapted to:
- intercept signaling information (210) corresponding to the call disconnection of the first party, wherein the signaling information (210) comprises an indication of a cause of the call disconnection, and
- send at least one connection update (220) directed to connecting the second party to a service node (120) in the telecommunication network for provision of one or more communication services, if said cause requires the provision of the communication service to the second party, said cause being identified in a list of possible causes as matching with any listed cause that requires the second party to be informed through said one or more communication services,
wherein the connection update is with held if said cause does not require the provision of the one or more communication services to the second party, said cause being identified in said list as a cause that does not need the second party to be informed.

5. The call management node (110) of claim 4, wherein the
service node (120) is adapted to provide
one or more communication services to either one of
the first and second parties.

6. The call management node (110) of claim 4, wherein the connection update comprises configuration information for the communication service, said configuration information being based on profiles associated with either one or both of the first and second parties (101-102).

7. The call management node (110) of any of claims 4 and 6, said call management node (110) being further adapted to wait for a given period of time prior to sending the connection update.

8. A computer readable carrier including computer program instructions that cause a computer to implement a method for alerting at least a second party (102) in a call with a first party (101) that said first party (101) experienced a call disconnection according to any of claims 1 to 3.

## Patentansprüche

1. Verfahren zum Hinweisen wenigstens eines zweiten Teilnehmers (102) einer Verbindung mit einem ersten Teilnehmer (101) darauf, dass beim ersten Teilnehmer eine Verbindungstrennung erfolgt ist, wobei das Verfahren **dadurch gekennzeichnet ist, dass** es die folgenden Schritte in einem Anrufmanagement-Knoten (110) eines Telekommunikationsnetzes umfasst:
- Abfangen von Signalisierungsinformationen (210), die der Verbindungstrennung des ersten Teilnehmers entsprechen, wobei die Signalisierungsinformationen (210) eine Angabe einer Ursache der Verbindungstrennung umfassen; und
- Senden wenigstens einer Verbindungsaktualisierung (220), die darauf ausgerichtet ist, den zweiten Teilnehmer mit einem Dienstknoten (120) in dem Telekommunikationsnetz zur Bereitstellung eines oder mehrerer Kommunikationsdienste zu verbinden, falls die Ursache die Bereitstellung der ein oder mehreren Kommunikationsdienste für den zweiten Teilnehmer erfordert, wobei die Ursache in einer Liste möglicher Ursachen als übereinstimmend mit irgendeiner aufgelisteten Ursache identifiziert wird, welche erfordert, dass der zweite Teilnehmer durch die ein oder mehreren Kommunikationsdienste informiert wird,
wobei die Verbindungsaktualisierung zurückgehalten wird, falls die Ursache nicht die Bereitstellung der ein oder mehreren Kommunikationsdienste für den zweiten Teilnehmer erfordert, wobei die Ursache in der Liste als eine Ursache identifiziert wird, welche nicht erfordert, dass der zweite Teilnehmer informiert wird.

2. Verfahren nach Anspruch 1, wobei die Verbindungsaktualisierung Konfigurationsinformationen für den Kommunikationsdienst umfasst, wobei die Konfigurationsinformationen auf Profilen basieren,
die einem von dem ersten und zweiten Teilnehmer (101-102) oder beiden zugeordnet sind.

3. Verfahren nach einem der vorhergehenden Ansprüche, welches ferner umfasst: Abwarten einer bestimmten Zeit vor dem Senden der Verbindungsaktualisierung.

4. Anrufmanagement-Knoten (110) in einem Telekommunikationsnetz zum Hinweisen wenigstens eines zweiten Teilnehmers (102) einer Verbindung mit einem ersten Teilnehmer (101) darauf, dass beim ersten Teilnehmer eine Verbindungstrennung erfolgt ist, **dadurch gekennzeichnet, dass** der Anrufmanagement-Knoten dafür ausgelegt ist:
- Signalisierungsinformationen (210) abzufangen, die der Verbindungstrennung des ersten Teilnehmers entsprechen, wobei die Signalisierungsinformationen (210) eine Angabe einer Ursache der Verbindungstrennung umfassen, und
- wenigstens eine Verbindungsaktualisierung (220) zu senden, die darauf ausgerichtet ist, den zweiten Teilnehmer mit einem Dienstknoten (120) in dem Telekommunikationsnetz zur Bereitstellung eines oder mehrerer Kommunikationsdienste zu verbinden, falls die Ursache die Bereitstellung des Kommunikationsdienstes für den zweiten Teilnehmer erfordert, wobei die Ursache in einer Liste möglicher Ursachen als übereinstimmend mit irgendeiner aufgelisteten Ursache identifiziert wird, welche erfordert, dass der zweite Teilnehmer durch die ein oder mehreren Kommunikationsdienste informiert wird,
wobei die Verbindungsaktualisierung zurückgehalten wird, falls die Ursache nicht die Bereitstellung der ein oder mehreren Kommunikationsdienste für den zweiten Teilnehmer erfordert, wobei die Ursache in der Liste als eine Ursache identifiziert wird, welche nicht erfordert, dass der zweite Teilnehmer informiert wird.

5. Anrufmanagement-Knoten (110) nach Anspruch 4, wobei der Dienstknoten (120) dafür ausgelegt ist, einen oder mehrere Kommunikationsdienste für einen von dem ersten und zweiten Teilnehmer bereitzustellen.

6. Anrufmanagement-Knoten (110) nach Anspruch 4, wobei die Verbindungsaktualisierung Konfigurationsinformationen für den Kommunikationsdienst umfasst, wobei die Konfigurationsinformationen auf Profilen basieren, die einem von dem ersten und zweiten Teilnehmer (101-102) oder beiden zugeordnet sind.

7. Anrufmanagement-Knoten (110) nach einem der Ansprüche 4 und 6, wobei der Anrufmanagement-Knoten (110) ferner dafür ausgelegt ist, vor dem Senden der Verbindungsaktualisierung eine bestimmte Zeit zu warten.

8. Computerlesbarer Datenträger, welcher Computerprogrammanweisungen enthält, welche bewirken, dass ein Computer ein Verfahren zum Hinweisen wenigstens eines zweiten Teilnehmers (102) einer Verbindung mit einem ersten Teilnehmer (101), dass beim ersten Teilnehmer (101) eine Verbindungstrennung erfolgt ist, nach einem der Ansprüche 1 bis 3 implementiert.

## Revendications

1. Procédé pour alerter au moins une seconde partie (102) dans un appel avec une première partie (101) du fait que ladite première partie a expérimenté une déconnexion d'appel, le procédé étant **caractérisé en ce qu'**il comprend, dans un nœud de gestion d'appels (110) d'un réseau de télécommunication, les étapes suivantes :
intercepter une information de signalisation (210) correspondant à la déconnexion d'appel de la première partie, l'information de signalisation (210) comprenant une indication d'une cause de la déconnexion d'appel ; et
envoyer au moins une mise à jour de connexion (220) dirigée pour connecter la seconde partie à un nœud de service (120) dans le réseau de télécommunication pour fournir un ou plusieurs services de communication, si ladite cause exige la fourniture du ou des services de communication à la seconde partie, ladite cause étant identifiée dans une liste de possibles causes comme concordant avec une cause répertoriée qui exige que la seconde partie soit informée par l'intermédiaire dudit ou desdits services de communication,
la mise à jour de connexion étant retenue si ladite cause n'exige pas la fourniture du ou des services de communication à la seconde partie, ladite cause étant identifiée dans ladite liste comme une cause qui ne nécessite pas que la seconde partie soit informée.

2. Procédé selon la revendication 1, dans lequel la mise à jour de connexion comprend une information de configuration pour le service de communication, ladite information de configuration étant basée sur des profils associés à la première et/ou à la seconde partie (101-102).

3. Procédé selon l'une quelconque des revendications précédentes, consistant en outre à :
attendre pendant une période de temps donnée avant d'envoyer la mise à jour de connexion.

4. Nœud de gestion d'appels (110) dans un réseau de télécommunication pour alerter au moins une seconde partie (102) dans un appel avec une première partie (101) du fait que ladite première partie a expérimenté une déconnexion d'appel,
le nœud de gestion d'appels étant **caractérisé en ce qu'**il est conçu pour :
intercepter une information de signalisation (210) correspondant à la déconnexion d'appel de la première partie, l'information de signalisation (210) comprenant une indication d'une cause de la déconnexion d'appel, et
envoyer au moins une mise à jour de connexion (220) dirigée pour connecter la seconde partie à un nœud de service (120) dans le réseau de télécommunication pour fournir un ou plusieurs services de communication, si ladite cause exige la fourniture du service de communication à la seconde partie, ladite cause étant identifiée dans une liste de possibles causes comme concordant avec une cause répertoriée qui exige que la seconde partie soit informée par l'intermédiaire dudit ou desdits services de communication,
la mise à jour de connexion étant retenue si ladite cause n'exige pas la fourniture du ou des services de communication à la seconde partie, ladite cause étant identifiée dans ladite liste comme une cause qui ne nécessite pas que la seconde partie soit informée.

5. Nœud de gestion d'appels (110) selon la revendication 4, dans lequel le nœud de service (120) est conçu pour fournir un ou plusieurs services de communication à l'une des première et seconde parties.

6. Nœud de gestion d'appels (110) selon la revendication 4, dans lequel la mise à jour de connexion comprend une information de configuration pour le service de communication, ladite information de configuration étant basée sur des profils associés à la première et/ou à la seconde partie (101-102).

7. Nœud de gestion d'appels (110) selon l'une quelconque des revendications 4 et 6, ledit nœud de gestion d'appels (110) étant en outre conçu pour attendre pendant une période de temps donnée avant d'envoyer la mise à jour de connexion.

8. Support lisible par ordinateur comprenant des instructions de programme informatique qui amènent un ordinateur à mettre en œuvre un procédé pour alerter au moins une seconde partie (102) dans un appel avec une première partie (101) du fait que ladite première partie (101) a expérimenté une déconnexion d'appel selon l'une quelconque des revendications 1 à 3.
